# FASCICULE DE BREVET EUROPEEN

(11) **EP 0 658 694 B1**
(45) Date de publication et mention de la délivrance du brevet: **11.11.1998**
(21) Numéro de dépôt: 94401908.2
(22) Date de dépôt: 26.08.1994
(51) Int. Cl.: F16B 2/24, F16B 21/20

(54) **Pince à fixation sur un élément allongé tel qu'une tige**
Klammer zur Befestigung eines langgestreckten Elements, etwa eines Schaftes
Clip for fastening an elongated element such as a stem

(30) Priorité: 14.12.1993 FR 9315007
(43) Date de publication de la demande: 21.06.1995
(73) Titulaire: RAPID S.A., F-75017 Paris (FR)
(72) Inventeur: Léon, Jean-Pierre, F-78800 Houilles (FR)
(74) Mandataire: Durand, Yves Armand Louis

(56) Documents cités:
- EP-A- 0 571 052
- FR-A- 2 199 579
- US-A- 4 725 177

## Description

La présente invention a essentiellement pour objet une pince en acier à ressort pouvant être fixée sur un élément allongé tel qu'une tige conformément au préambule de la revendication 1 (US-A-4 725 177).

Une telle pince permet par exemple la retenue ou la fixation de deux pièces quelconques sur une tige traversant ces pièces.

On connaît déjà des pièces plates ou des rondelles susceptibles de s'accrocher sur une tige pour permettre un assemblage ou une fixation. Mais ces pièces plates ou rondelles sont d'une manière générale difficilement démontables, voire même indémontables, et de plus, il est souvent difficile de les mettre en place sans utiliser un outil spécial.

La présente invention a pour but de remédier à ces inconvénients en proposant une pince facile à mettre en place et à monter, qui peut être démontée sans effort, et qui demeure d'une conception mécanique très simple, peu coûteuse, et au demeurant très efficace.

A cet effet, l'invention a pour objet une pince à fixation sur un élément allongé tel qu'une tige ou analogue, comprenant les caractéristiques de la revendication 1.

Cette pince peut être encore caractérisée en ce qu'en position de non utilisation et de repos de la pince, les deux languettes précitées sont situées sensiblement dans un même plan qui est sensiblement orthogonal au plan de chaque branche du U.

Les deux languettes peuvent s'écarter très légèrement d'un même plan sans pour cela sortir du cadre de l'invention.

Suivant une autre modification de l'invention, les extrémités libres des languettes présentent une forme arquée et apte à coopérer avec la périphérie de la tige.

Selon encore une autre modification de la pince selon cette invention, les deux branches du U sont réunies à leur base par deux bras qui résultent du découpage des languettes dans l'embase du U et qui sont chacun repliés de façon à former, de chaque côté des languettes, un dièdre à arête tournée du côté de la partie ouverte du U.

Les bras en question forment avantageusement et en quelque sorte un ressort permettant le fonctionnement de la pince.

On observera encore que les extrémités libres des branches du U de la pince sont repliées vers l'extérieur, ce qui facilite sa manoeuvre.

Mais les avantages et caractéristiques de l'invention apparaîtront mieux dans la description détaillée qui suit et se réfère aux dessins annexés, donnés uniquement à titre d'exemple et dans lesquels :
La figure 1 est une vue en perspective d'une pince conforme aux principes de cette invention ; et
La figure 2 est une vue en élévation et coupe verticale de la pince montrée en position montée sur une tige pour réaliser l'assemblage et la fixation de deux pièces quelconques.

Suivant l'exemple de réalisation représenté sur les dessins, une pince selon cette invention constitue une pièce unique en acier à ressort qui est repliée de façon à présenter la forme générale d'un U comportant deux branches 1 sensiblement parallèles et une embase 2.

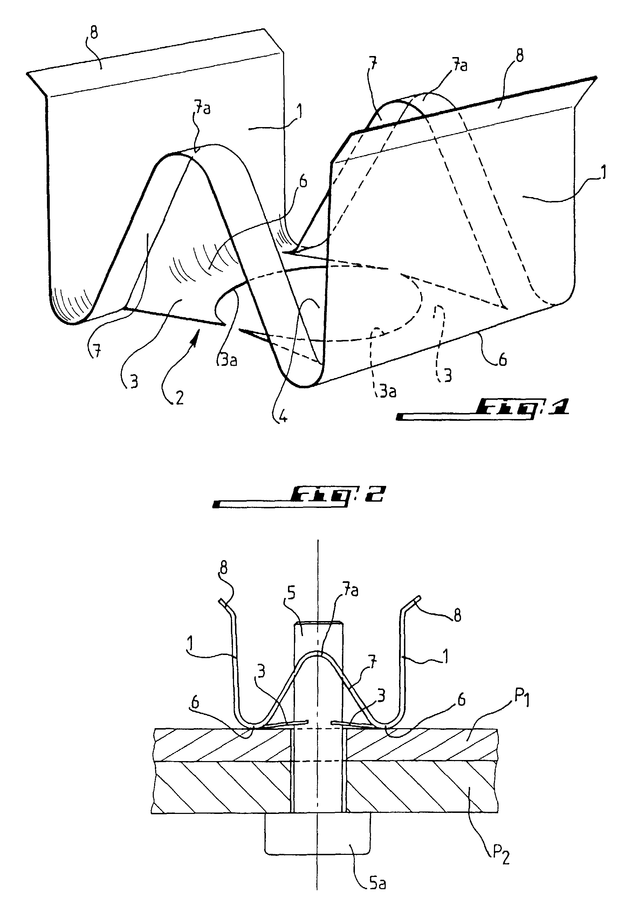

Dans l'embase 2 sont découpées deux languettes 3 dont les extrémités libres et en vis-à-vis 3a définissent entre elles un espace 4 permettant le passage d'une tige 5 bien visible sur la figure 2.

Chaque languette 3, comme on le voit bien sur la figure 1, prend naissance à la base 6 des branches élastiquement déformables 1 de la pince.

Les extrémités libres 3a des languettes 3 sont, suivant l'exemple représenté, arquées suivant un demi-cercle, de façon à pouvoir coopérer avec la périphérie de la tige 2, comme on l'expliquera en détail plus loin.

Les deux languettes 3, lorsque la pince est au repos, sont situées sensiblement dans le même plan, lequel plan est sensiblement orthogonal au plan de chaque branche 1 du U.

En réalité, comme on le voit bien sur la figure 1, les languettes 3 s'écartent quelque peu de ce plan horizontal, et cela vers la partie ouverte du U.

On a montré en 7 deux bras qui réunissent élastiquement les deux branches 1 du U. Ces deux bras, situés de chaque côté des languettes 3 résultent du découpage desdites languettes dans l'embase 2 du U formant la pince.

Comme il apparaît clairement sur les figures 1 et 2, les bras 7 sont chacun repliés de façon à former, de chaque côté des languettes, un dièdre à arête 7a tournée du côté de la partie ouverte du U. Ainsi, les bras 7 confèrent à la pince l'élasticité et les propriétés de rappel voulues lors de son utilisation.

Les extrémités libres des branches 1 du U de la pince sont repliées vers l'extérieur pour former un rebord 8 facilitant la manutention de la pince et son utilisation.

Mais pour une meilleure compréhension de l'invention, on décrira brièvement ci-après le fonctionnement de la pince qui vient d'être décrite en se reportant plus particulièrement à la figure 2.

La pince peut être utilisée par exemple pour assembler deux pièces P₁, P₂ traversées par la tige 5 qui peut comporter une tête 5a.

Pour réaliser la fixation des pièces P₁, P₂, l'utilisateur saisit la pince par les rebords 8 et la comprime, ce qui provoque l'agrandissement de l'espace 4 entre les extrémités libres 3a des languettes 3 qui prennent naissance à la base 6 des branches élastiquement déformables 1. On observera que la compression de la pince, c'est-à-dire le rapprochement des branches 1, est rendu aisée pour l'utilisateur grâce à la forme des bras 7.

La pince est alors introduite sur l'extrémité de la tige 5, et en relâchant les branches 1, les languettes 3 viendront s'accrocher par leurs extrémités libres 3a sur la périphérie de la tige 5.

L'assemblage ainsi réalisé avec la pince sera solide et pourra donc résister efficacement aux sollicitations extérieures, étant bien entendu que, pour un démontage éventuel, la pince pourra facilement être enlevée de la tige par une nouvelle compression des branches 1.

Bien entendu, l'invention n'est nullement limitée au mode de réalisation décrit et illustré qui n'a été donné qu'à titre d'exemple.

C'est ainsi que la forme des bras repliés 7 pourra être autre que celle représentée, à la condition de permettre une manoeuvre aisée de la pince sans altérer ses propriétés de fixation. On pourra prévoir un seul bras aussi bien que plusieurs bras. La forme des extrémités libres des languettes pourra aussi être quelconque, en fonction de la forme de la tige ou du goujon sur lequel doit être fixée la pince.

C'est dire que l'invention comprend tous les équivalents techniques des moyens décrits que leurs combinaisons, si celles-ci sont effectuées suivant son esprit.

## Revendications

1. Pince à fixation sur un élément allongé tel qu'une tige ou analogue (5), comprenant une pièce en forme de U élastiquement déformable constituée par deux branches (1) sensiblement parallèles et une embase (2) formée de deux languettes découpées (3) définissant entre elles un espace (4) pour le passage de la tige (5), caractérisée en ce que dans les côtés des languettes (3) formant l'embase (2) du U sont découpés deux bras (7) qui prennent naissance, comme les languettes (3), à la base (6) des branches (1) du U et qui sont repliés de façon à former, de chaque côté des languettes (3), un dièdre à arête (7a) tournée du côté de la partie ouverte du U, lesquels bras (7) confèrent à la pince les propriétés d'élasticité et de rappel voulues respectivement lors de la compression des extrémités libres des branches (1) pour permettre le passage de la tige (5) entre les extrémités libres en vis à vis (3a) des languettes (3), et lors du relâchement des branches (1) pour assurer l'accrochage des languettes (3) sur la tige (5).

2. Pince selon la revendication 1, caractérisée en ce qu'en position de non utilisation et de repos de la pince, les deux languettes précitées (3) sont situées sensiblement dans un même plan qui est sensiblement orthogonal au plan de chaque branche (1) du U.

3. Pince selon l'une des revendications 1 à 3, caractérisée en ce que les extrémités libres (3a) des languettes (3) présentent une forme arquée et apte à coopérer avec la périphérie de la tige (5).

4. Pince selon l'une des revendications 1 à 3, caractérisée en ce que les extrémités libres (8) des branches (1) du U de la pièce ont repliées vers l'extérieur.

## Patentansprüche

1. Klammer zur Befestigung an einem langgestreckten Element, wie einem Schaft oder dergleichen (5) mit einem elastisch verformbaren U-förmigen Werkstück, das durch zwei etwa parallele Schenkel (1) und einen aus zwei untereinander einen Raum (4) für den Durchgang des Schaftes (5) bestimmenden ausgeschnittenen Züngchen (3) bestehenden Grundteil (2) gebildet wird, dadurch gekennzeichnet, daß in den Seiten der den Grundteil (2) des U's bildenden Züngchen (3) zwei Arme (7) ausgeschnitten sind, die, wie die Züngchen (3) von dem Grund (6) aus der Schenkel (1) des U's entstehen und die umgebogen sind, um beiderseits der Züngchen (3) einen Flächenwinkel mit dem offenen Teil des U's zugewandter Scheitelkante (7a) zu bilden, welche Arme (7) der Klammer die gewünschten Elastizitäts-und Rückstelleigenschaften verleihen, jeweils während des Zusammendrückens der freien Enden der Schenkel (1), um den Durchgang des Schaftes (5) zwischen den einander gegenüberliegenden freien Enden (3a) der Züngchen (3) zu gestatten und während der Freigabe der Schenkel (1), um das Anhaken der Züngchen (3) an dem Schaft (5) zu gewährleisten.

2. Klammer gemäß Anspruch 1, dadurch gekennzeichnet, daß in der Nichtverwendungs- und Ruhestellung der Klammer, die beiden vorgenannten Züngchen (3) etwa in einer selben Ebene, die etwa senkrecht zur Ebene jedes Schenkels (1) des U's verläuft, gelegen sind.

3. Klammer nach einem der Ansprüche 1 und 2, dadurch gekennzeichnet, daß die freien Enden (3a) der Züngchen (3) eine zur Zusammenwirkung mit dem Umfang des Schaftes (5) geeignete bogenförmige Gestalt aufweisen.

4. Klammer nach einem der Ansprüche 1 bis 3, dadurch gekennzeichnet, daß die freien Enden (8) der Schenkel (1) des U's des Werkstückes nach aussen umgebogen sind.

## Claims

1. Clip for fastening onto an elongated element such as a shank or the like (5) comprising an elastically deformable U-shaped part constituted by two substantially parallel legs (1) and a base (2) formed of two cut-out small tongues (3) defining a space (4) therebetween for the passage of the shank (5), characterized in that in the sides of the small tongues (3) forming the base (2) of the U are cut out two arms (7) which have their root like the small tongues (3) at the base portion (6) of the legs (1) of the U and which are bent so as to form on either side of the small tongues (3) a dihedron with an edge (7a) turned towards the open portion of the U, which arms (7) impart to the clip the desired elasticity and returning properties respectively during the compression of the free ends of the legs (1) to permit the passage of the shank (5) between the mutually confronting ends (3a) of the small tongues (3) and during the release of the legs (1) for ensuring the hooking of the small tongues (3) onto the shank (5).

2. Clip according to claim 1, characterized in that in the non-use and rest position of the clip, both aforesaid small tongues (3) are located substantially in a same plane which is substantially orthogonal to the plane of each leg (1) of the U.

3. Clip according to one of claims 1 and 2, characterized in that the free ends (3a) of the small tongues (3) exhibit an arcuate shape adapted to co-operate with the periphery of the shank (5).

4. Clip according to one of claims 1 to 3, characterized in that the free ends (8) of the legs (1) of the U of the part are bent outwards.
